(19) **Europäisches Patentamt / European Patent Office / Office européen des brevets**

(11) **EP 3 734 328 B1**

(12) **EUROPEAN PATENT SPECIFICATION**

(45) Date of publication and mention
of the grant of the patent:
**10.01.2024 Bulletin 2024/02**

(21) Application number: **19171725.5**

(22) Date of filing: **30.04.2019**

(51) International Patent Classification (IPC):
**G01S 17/00** (2020.01)    **G01S 17/10** (2020.01)
**G01S 17/32** (2020.01)    **G01S 17/58** (2006.01)
**G01S 7/481** (2006.01)

(52) Cooperative Patent Classification (CPC):
**G01S 7/4815; G01S 17/58**

(54) **A PHOTONIC INTEGRATED CIRCUIT AND A THREE-DIMENSIONAL LASER DOPPLER VIBROMETER COMPRISING THE SAME**

PHOTONISCHE INTEGRIERTE SCHALTUNG UND DREIDIMENSIONALES LASER-DOPPLER-VIBROMETER DAMIT

CIRCUIT INTÉGRÉ PHOTONIQUE ET VIBROMÈTRE LASER DOPPLER TRIDIMENSIONNEL LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.11.2020 Bulletin 2020/45**

(73) Proprietors:
• **IMEC vzw**
  **3001 Leuven (BE)**
• **Universiteit Gent**
  **9000 Gent (BE)**

(72) Inventors:
• **LI, YanLu**
  **3001 Leuven (BE)**
• **BAETS, Roeland**
  **3001 Leuven (BE)**

(74) Representative: **Gevers Patents**
**Intellectual Property House**
**Holidaystraat 5**
**1831 Diegem (BE)**

(56) References cited:
**US-A1- 2013 083 389    US-A1- 2016 252 616**

• **TAKAYUKI OHTOMO ET AL: "Three-channel three-dimensional self-mixing thin-slice solid-state laser-Doppler measurements", APPLIED OPTICS, OPTICAL SOCIETY OF AMERICA, WASHINGTON, DC; US, vol. 48, no. 3, 20 January 2009 (2009-01-20), pages 609-616, XP001521590, ISSN: 0003-6935, DOI: 10.1364/AO.48.000609**

## Description

### Technical field

The present disclosure relates to a photonic integrated circuit (PIC) for a three-dimensional (3D) laser Doppler vibrometer (LDV). The present disclosure also relates to a 3D LDV comprising the PIC.

### Background art

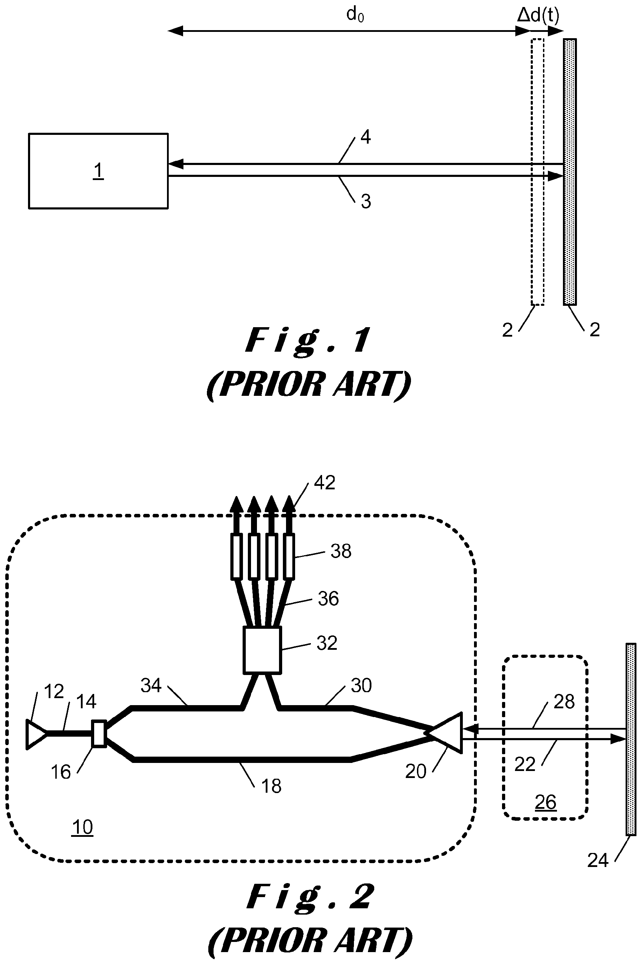

A laser Doppler vibrometer (LDV) 1 is an instrument used to measure the temporal velocity or displacement of a vibrating surface 2 as illustrated in Figure 1. LDV 1 sends out a laser beam 3 which is reflected by surface 2 located a distance $d_0$ away. The incoming reflected laser beam 4 is received by the LDV. The instantaneous frequency shift of the reflection signal $f_{Doppler}(t)$ is proportional to the temporal velocity $v(t)$ of the target surface. The relation is expressed as

$$f_{Doppler}(t) = \frac{2v(t)}{\lambda_0},\qquad\qquad(1)$$

where $\lambda_0$ is the wavelength of the measurement light, i.e. the wavelength of the laser beam 3. This relation can also be understood as the phase shift of the reflection beam 4 as a result of the movement of the target surface:

$$\theta_{Doppler}(t) = \frac{2\pi}{\lambda_0} \cdot 2\Delta d(t).\qquad\qquad(2)$$

The expression $\Delta d(t)$ is the displacement of the target surface in the direction of the laser beam as shown in Figure 1. A factor 2 is placed before $\Delta d(t)$ because the optical path change of the beam corresponds to a roundtrip of the displacement.

There are two main types of LDVs, namely a stationary LDV and a scanning LDV. The present disclosure is related to a stationary LDV which is capable of retrieving movement information of the vibrating target in one location but, typically, only in one direction.

A known photonic integrated circuit (PIC) 10 for an on-chip LDV is shown in Figure 2. The PIC 10 comprises input means 12, such as a grating coupler, for coupling an external laser beam (not shown) to the PIC. The laser beam is sent via waveguide 14 to a splitter 16 where the signal is split into a measurement signal and a reference signal. The measurement signal is sent via a waveguide 18 to a transmit-receive antenna 20, which outputs the measurement signal as an outgoing laser beam 22 to the target 24. An optical system 26 is typically used to ensure that the outgoing signal 22 is focused onto a single point, i.e. the target location 24, where it is reflected and sent back to the PIC 10 as a reflected signal 28. The reflected signal 28 travels back, typically via the optical system 26, and is received by the transmit-receive antenna 20 on the PIC 10. The received reflected signal is sent from the transmit-receive antenna 20 via a waveguide 30 to a mixer 32. The reference signal originating in splitter 16 is sent via a waveguide 34 to the mixer 32. The mixer 32, e.g. a 90° optical hybrid, on the PIC 10 mixes the received reflected signal and the reference signal. By using a 90° optical hybrid as the mixer 32, the mixer 32 has four optical output signals that are sent via waveguides 36 to individual photo-diodes 38 which converts the optical mixed signal into photo-current signals. Using a demodulator (not shown) allows determining the desired movement information from the photo-current signals 42.

Using an LDV as explained above, it is possible to obtain one-dimensional information, namely the vibration behaviour in the direction of the outgoing signal 3, 22. However, three-dimensional (3D) vibration information is also required in many applications, such as studying the movements of the incudomalleolar joint in the middle ear (biomechanics), monitoring the simultaneous in-plane and out-of-plane movements of a surface wave (modal testing), or understanding 3D movements of nanostructures (MEMS).

A standard way to realize a 3D LDV measurement is to use three or more separate LDV devices that measure on the same target location simultaneously. The reason to use three different LDV devices rather than three laser beams from a single laser source is to avoid cross talk of the beams. Since different laser beams are not coherent to each other, there will be no crosstalk between any of the LDV devices. However, the cost of this system is considerable because of the use of several laser sources.

In the art it is also known to realize a 3D LDV measurement using a single laser source as described in Takayuki Ohtomo et al. "Three-channel three-dimensional self-mixing thin-slice solid-state laser-Doppler measurements", 20 January 2009, Optical Society of America, APPLIED OPTICS, Vol. 48, No. 3. In this publication, a single laser source is used in conjunction with a plurality of splitters and acousto-optical modulators (AOMs), also known as optical frequency shifters, to generate three laser beams having different carrier frequencies.

A similar set-up was described in Kenju Otsuka et al. "Two-channel self-mixing laser Doppler measurement with carrier-frequency-division multiplexing" 20 March 2005, Optical Society of America, APPLIED OPTICS, Vol. 44, No. 9 where two laser beams are generated from a single laser source using AOMs.

A downside of such a set-up is their size since this is a free-space set-up.

US 2013/083389 A1 discloses a LDV photonic integrated circuit (PIC) having an optical selector to direct light towards an off-chip target region. Depending on the configuration of the optical selector, the light beam is output from a different location on the PIC.

## Summary of the disclosure

It is an object of the present disclosure to provide a photonic integrated circuit (PIC) for a three-dimensional (3D) laser Doppler vibrometer (LDV).

This object is achieved according to the disclosure with a PIC for a 3D LDV, the PIC comprising: a splitter to split a laser beam into a measurement signal and a reference signal; a phase-amplitude modulator array coupled to a transmitting array to generate, from the measurement signal, n output signals to be directed to a single target location and to output the n output signals from substantially a single location, each output signal having a different direction and a different carrier frequency, n being a natural number greater than or equal to three; a receiving array comprising m receiving antennas, each receiving antenna being configured to receive a reflection signal from a different receiving direction, each reflection signal being indicative of one or more of the output signals having been reflected at the single target location, m being a natural number greater than or equal to three; for each receiving antenna, a mixer connected thereto to mix the reference signal with the received reflected signal; and, for each mixer, at least one photo-diode connected thereto to generate a photo-current signal from the mixed signal.

The provision of an on-chip phase-amplitude modulator array coupled to a transmitting array allows the generation of at least three output signals from a single laser source with different carrier frequencies and with different directions. Using an external optical system, the various output signals are focused on a single target location. In this way, the different output signals arrive at the target location from different directions. The reflected signals are then returned, via the optical system, to at least three receiving antennas that each receive signals from different directions. The various received signals may include reflections due to one or more of the output signals. Mixers create a mixed signal for each received signal with the reference signal, while photo-diodes generate the corresponding photo-current signal, which signal is then further analyzed in a demodulator which is distinct from the PIC to obtain the desired movement information in at least three different directions, i.e. 3D information.

Each output signal is assigned with a different carrier frequency, so that, in the signal processing, i.e. the demodulator, any cross-talk can be distinguished in the frequency domain allowing them to be removed and/or recovered. In particular, when signals from different output signals are received at a same receiving antenna, they can be demultiplexed and distinguished based on their different carrier frequencies by the demodulator.

By using this PIC, only one laser source is needed for a 3D LDV, which reduces the volume and product cost of the 3D LDV device. Moreover, the on-chip design is much smaller compared to known free-space set-ups relying on acousto-optical modulators.

In an embodiment of the present disclosure, the transmitting array comprises k transmitting antennas positioned adjacent one another along a substantially straight line, k being a natural number greater than or equal to three.

In this embodiment, the minimum number of transmitting antennas is used which reduces the cost of the PIC.

In a preferred embodiment of the present disclosure, the k transmitting antennas generate a combined near-field pattern $\sum_{j=1}^{n} s_j \cdot exp[i2\pi(sin(\alpha_j \cdot x + f_j t))]$ where j denotes one of the n output signals, $x$ represents the coordinate along the direction of the k transmitting antennas, $t$ is time, $\alpha_j$ is the angle of $j^{th}$ output signal with respect to the direction normal to the direction of the k transmitting antennas, $f_j$ is the optical frequency of the $j^{th}$ output signal and $s_j$ represents the amplitude of the $j^{th}$ output signal. Preferably, n is equal to three, $\alpha_1 = -\alpha_3$, $\alpha_2 = 0$, $f_1 = f_2 - df$, $f_3 = f_2 + df$ and $s_1 = s_2 = s_3 = 1$.

This allows the generation of three beams with an equal amplitude with a centrally directed beam having a frequency $f_2$ and two offset beams with a same frequency shift. This is a symmetric set-up which provides for an easy demodulation.

In an advantageous embodiment of the present disclosure, for a transmitting antenna at position $x$, the field amplitude is $1 + 2 \cdot cos[2\pi(sin(\alpha_1 \cdot x - df \cdot t))]$ and the phase is $2\pi f_2 \cdot t$. In particular, a ramp function is used in the phase modulation.

Such a transmitting antenna set-up generates, from the measurement signal, the symmetric set-up of outgoing signals described above. The use of a ramp function in the phase modulation ensures that the phase jumps back to 0 quickly when it increases beyond to $2\pi$.

In an alternative embodiment of the present disclosure, the transmitting array comprises k transmitting antennas positioned in a two-dimensional array, k being a natural number greater than or equal to four.

In this alternative embodiment, more transmitting antennas are required to form a two-dimensional array. However, by using a two-dimensional array, a simpler external optical system may be used.

In a preferred embodiment of the present disclosure, m is equal to n and the transmitting antennas are identical to the receiving antennas.

Using the same antennas for transmitting and receiving allows to save space on the PIC design by decreasing the number of antennas to be included.

In a preferred embodiment of the present disclosure, the receiving antennas and the transmitting antennas are formed by one or more grating couplers.

In an embodiment of the present disclosure, m is equal to n and each receiving direction is the inverse of a corresponding output signal direction.

This provides a symmetric set-up for the direction of the outgoing beams which makes it easier to design the external optical system.

In an embodiment of the present disclosure, the photo-diodes are balanced photo-diodes.

Balanced photo-diodes help to remove noise common in the mixed signals, e.g. due to the optical system on the output signals and the reflected signals.

In an embodiment of the present disclosure, the PIC further comprises input means to provide an external laser beam to the PIC. Preferably, the input means is one of: a grating coupler and an edge coupler, such as a taper or an inverted taper.

A grating coupler is a surface coupler, which is easy for a wafer level test. An edge coupler has less insertion loss but it requires a preparation of the chip edge.

The object according to the invention is also achieved by a 3D LDV comprising: a laser source to generate a laser beam; a PIC as described above, the PIC being coupled to the laser source; an optical mirror system configured to focus the n output signals on the single target location and to focus the reflection signals from the single target location to the PIC; and a demodulator to determine the instantaneous velocity and direction of the single target location from the photo-current signals.

The advantages of the 3D LDV are the same as the PIC described above.

## Brief description of the drawings

The disclosure will be further explained by means of the following description and the appended figures.

Figure 1 shows a schematic set-up of a known LDV.

Figure 2 shows a known PIC used in the LDV of Figure 1.

Figure 3 shows a PIC according to the present disclosure for a 3D LDV.

Figure 4 shows a 3D LDV set-up according to the present disclosure.

Figure 5 shows an alternative 3D LDV set-up according to the present disclosure.

Figures 6A to 6F show different possible splitters that may be used in the PIC of Figure 3.

Figure 7A shows the beam angles at the LDV location in the set-up of Figure 5.

Figure 7B shows the beam angles at the target location in the set-up of Figure 5.

## Description of the disclosure

The present disclosure will be described with respect to particular embodiments and with reference to certain drawings but the disclosure is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the disclosure.

Furthermore, the terms first, second, third and the like in the description and in the claims, are used for distinguishing between similar elements and not necessarily for describing a sequential or chronological order. The terms are interchangeable under appropriate circumstances and the embodiments of the disclosure can operate in other sequences than described or illustrated herein.

Moreover, the terms top, bottom, over, under and the like in the description and the claims are used for descriptive purposes. The terms so used are interchangeable under appropriate circumstances and the embodiments of the disclosure described herein can operate in other orientations than described or illustrated herein.

Furthermore, the various embodiments, although referred to as "preferred" are to be construed as exemplary manners in which the disclosure may be implemented rather than as limiting the scope of the disclosure.

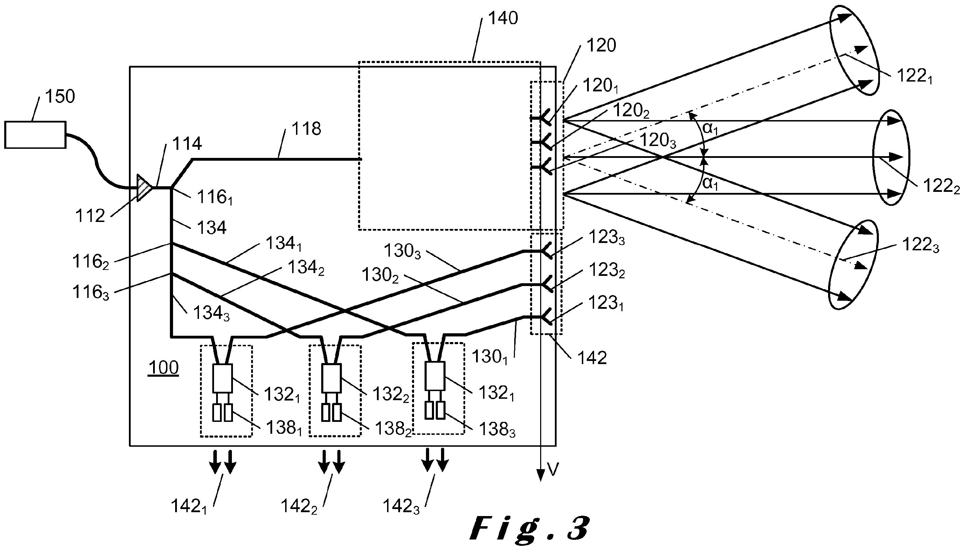

A PIC according to the present disclosure will be described with respect to Figure 3. Elements or components previously described with reference to Figure 2 bear the same last two digits but preceded by a '1'.

The PIC 100 has input means 112 that allow the PIC 100 to be connected to an external laser 150. The input means 112 may be a grating coupler or an edge coupler, such as a taper or an inverted taper. Waveguide 114 sends the incoming laser beam signal to a first splitter $116_1$ that splits the signal into a measurement signal and a reference signal. Based on the number of outgoing signals 122 (described below in more detail), the PIC 100 is provided with further splitters $116_2$ and $116_3$ to further split the reference signal into the required number of reference signals, three in the illustrated embodiment. The various reference signals are sent via waveguides $134_1$, $134_2$, $134_3$ to the different mixers $132_1$, $132_2$, $132_3$. The measurement signal is sent via waveguide 118 to the phase-amplitude modulator array 140 that is coupled to the transmitting array 120.

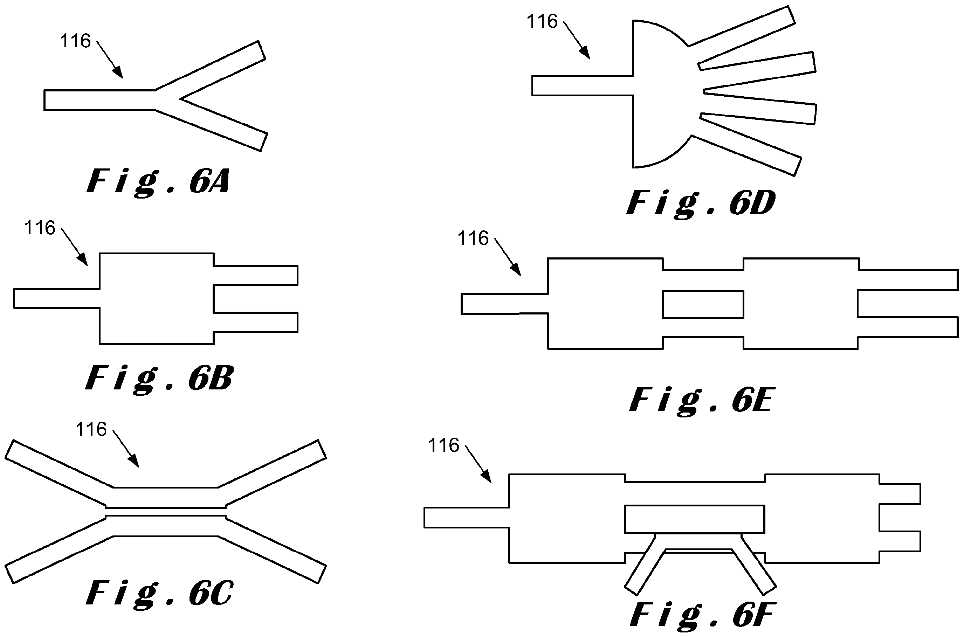

It will be readily appreciated that the splitters $116_1$, $116_2$ and $116_3$ may also be combined into a single splitter. Several examples of splitters are given in Figures 6A to 6F. Figure 6A shows a y-splitter, Figure 6B illustrates a multi-mode interference coupler, Figure 6C shows a directional coupler, a star coupler is illustrated in Figure 6D, while a combined splitter is shown in Figure 6E and Figure 6F illustrates a tunable splitter. The choice of splitter naturally depends on the application at hand, e.g. the total number of signals that need to be generated from the initial signal.

The phase-amplitude modulator array 140 coupled to the transmitting array 120 allows the generation of three output signals $122_1$, $122_2$, $122_3$, from the measurement signal, each output signal $122_1$, $122_2$, $122_3$ having its different carrier frequency and a different output direction. As used herein, the term "different" is used to refer to a property, e.g. frequency or direction, of a signal from a plurality of signals, which property is different from the same property of all other signals from the plurality of signals.

An example of a phase-amplitude modulator array coupled to a transmitting array is described by Christos Tsokos et al. in "Analysis of a Multibeam Optical Beamforming Network Based on Blass Matrix Architecture", IEEE, Journal of Lightwave Technology, Vol. 36, No. 16, August 15, 2018, doi: 10.1109/JLT.2018.2841861.

As shown in Figure 3, the transmitting array 120 consists of three aligned transmitting antennas $120_1$, $120_2$, $120_3$. Such transmitting array 120 combines the several optical signals into one field by placing the transmitters very close to each other. The phase-amplitude modulator array 140 ensures that the amplitudes and the phases of the combined field can be purpose modulated in the time and space domain. With a proper modulation algorithm, a combined near-field pattern can be generated to create the required beams. To generate n, e.g. three, output beams with output angles of $\alpha_j$ (with respect to the direction normal to the direction of the k transmitting antennas, i.e. the horizontal direction H) and optical frequencies of $f_j$, the combined near-field pattern should be expressed as

$$\sum_{j=1}^{n} s_j \cdot exp\left[i2\pi\left(sin(\alpha_j \cdot x + f_j t)\right)\right]$$

, where j denotes one of the n output signals, x represents the coordinate along the direction of the k transmitting antennas, i.e. the vertical direction V, $t$ is time, and $s_j$ represents the amplitude of the $j^{th}$ output signal. In the illustrated case, $\alpha_1 = -\alpha_3$, $\alpha_2 = 0$, $f_1 = f_2 - df$, $f_3 = f_2 + df$ and $s_1 = s_2 = s_3 = 1$.

In order for such a combined near-field pattern to be generated, a transmitting antenna 120i at position x has a field amplitude of $1 + 2 - \cos[2\pi(\sin(\alpha_1 \cdot x - df \cdot t))]$ and a phase is $2\pi f_2 - t$. A ramp function is used in the phase modulation to handle the infinitely increasing phase shift.

In the PIC 100, there is provided a receiving antenna array 142 consisting of three receiving antennas $123_1$, $123_2$, $123_3$. Each receiving antenna $123_1$, $123_2$, $123_3$ receives a reflection signal $128_1$, $128_2$, $128_3$ from a different receiving direction, each reflection signal being indicative of one or more of the output signals $122_1$, $122_2$, $122_3$ having been reflected at the single target location (not shown). In the illustrated embodiment, the receiving directions are the inverse of the output directions.

The received reflected signals are sent via waveguides $130_1$, $130_2$, $130_3$ to the different mixers $132_1$, $132_2$, $132_3$. The mixers $132_1$, $132_2$, $132_3$ mix the received reflected signals and the reference signals and output two optical signals that are sent to individual balanced photo-diodes $138_1$, $138_2$, $138_3$ which convert the optical mixed signal into photo-current signals $142_1$, $142_2$, $142_3$.

It will be readily appreciated that the mixers $132_1$, $132_2$, $132_3$ may be a 90 degree optical hybrid (i.e. a $2 \times 4$ splitter) or a $2 \times 2$ splitter or any other component that can generate multiple outputs where the optical path differences between the reference and measurement signals are different for different output ports.

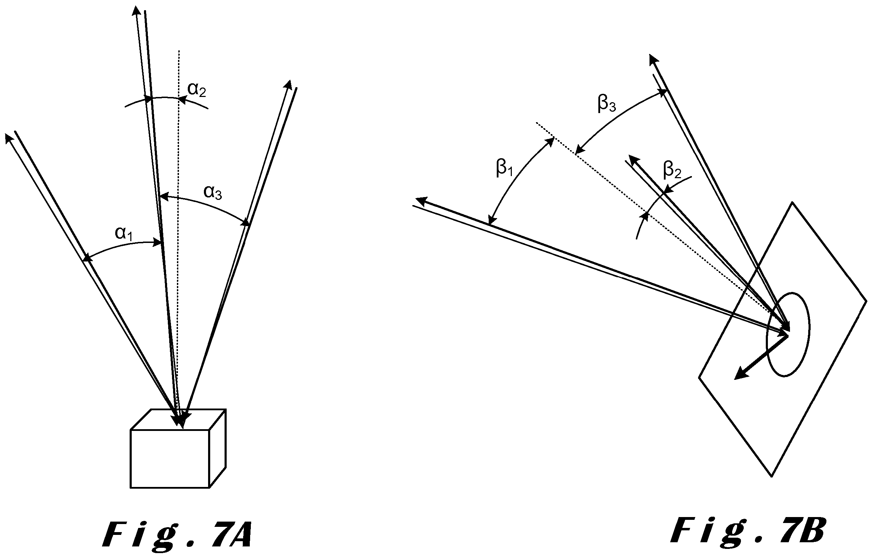

Using a demodulator (not shown) allows determining the desired movement information from the photo-current signals 142. Since each output signal $122_1$, $122_2$, $122_3$ is assigned with a different carrier frequency, the demodulator can distinguish any cross-talk in the frequency domain allowing them to be removed and/or recovered. For example, the photo-currents from the balanced photo-diodes 138 can be demodulated at three different carrier frequencies $f_1$, $f_2$, and $f_3$, with three band-pass filters. Therefore, three velocities can be obtained as $v_1$, $v_2$, and $v_3$. From the relation of frequency $f_j$ and output beam angle $\alpha_j$ (see Figure 7A), it is known that the measured velocity $v_{j1}$ corresponds to the

output direction $\alpha_j$ and the input direction $\alpha_1$. Similarly, we can also obtain $v_{j2}$, and $v_{j3}$. These measured velocities are partial velocities corresponds to a certain incoming-outgoing direction pair $\beta_j \rightarrow \beta_m$ in the target (see Figure 7B) according to the optical system design, where m= 1,2, or 3 is the index of the reflection beams. In the most common settings, $\beta_1$, $\beta_2$, and $\beta_3$ form three vectors that are orthogonal to each other. In this case, $v_{11}$, $v_{12}$, and $v_{13}$ corresponds to the measured velocity components in three orthogonal directions.

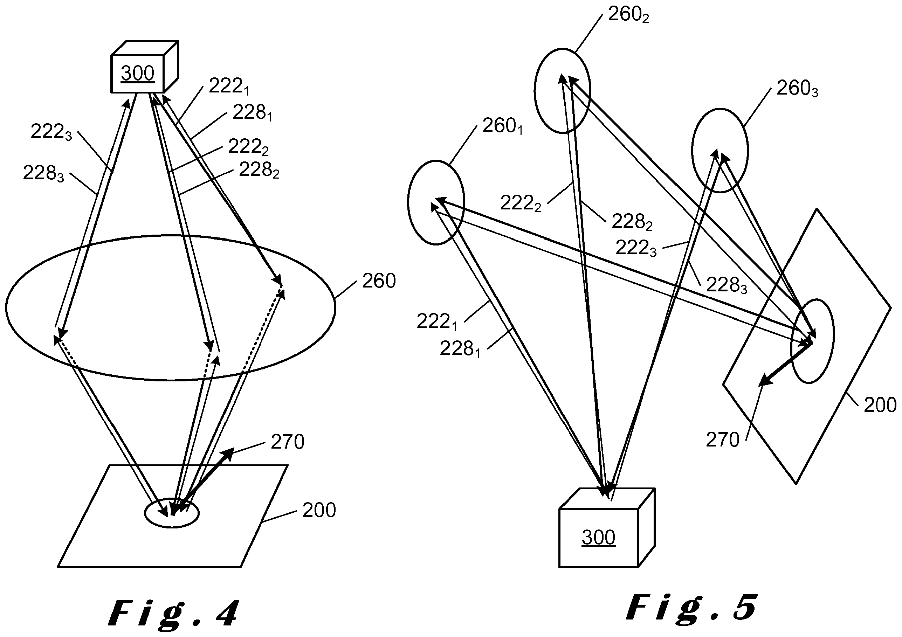

Figures 4 and 5 illustrate two different 3D LDV set-ups. The LDV 300 comprises the PIC described with respect to Figure 3 above. The LDV 300 sends out three output signals $222_1$, $222_2$, $222_3$ that are focused via a single optical system 260 (see Figure 4 embodiment) or multiple optical systems $260_1$, $260_2$, $260_3$ (see Figure 5 embodiment) to a single target location 200. The target location 200 is moving as indicated by the arrow 270. The reflected signals $228_1$, $228_2$, $228_3$ are sent back to the LDV using the same optical system(s) 260, $260_1$, $260_2$, $260_3$.

As shown in Figures 4 and 5, due to the output signals $222_1$, $222_2$, $222_3$ having a different direction, the signal impacting at the target location 260 also have a different direction such that each output signal $222_1$, $222_2$, $222_3$ obtains information of the vibration in a different direction. By deriving the phase shift in each reflected signal $228_1$, $228_2$, $228_3$, three-dimensional vibration information is obtained.

Although aspects of the present disclosure have been described with respect to specific embodiments, it will be readily appreciated that these aspects may be implemented in other forms within the scope of the disclosure as defined by the claims.

## Claims

1. A photonic integrated circuit, PIC, (100) configured for a three-dimensional, 3D. laser Doppler vibrometer, LDV, the PIC comprising:

    - a splitter (116) to split a laser beam into a measurement signal and a reference signal;
    - a phase-amplitude modulator array (140) coupled to a transmitting array (120) to generate, from the measurement signal, n output signals (122) to be directed to a single target location and to output the n output signals from substantially a single location, each output signal having a different direction and a different carrier frequency, n being a natural number greater than or equal to three;
    - a receiving array (142) comprising m receiving antennas ($123_1$, $123_2$, $123_3$), each receiving antenna being configured to receive a reflection signal from a different receiving direction, each reflection signal being indicative of one or more of the output signals having been reflected at the single target location, m being a natural number greater than or equal to three;
    - for each receiving antenna, a mixer (132) connected thereto to mix the reference signal with the received reflected signal; and
    - for each mixer, at least one photo-diode (138) connected thereto to generate a photo-current signal from the mixed signal.

2. PIC according to claim 1, wherein the transmitting array comprises k transmitting antennas ($120_1$, $120_2$, $120_3$) positioned adjacent one another along a substantially straight line, k being a natural number greater than or equal to three.

3. PIC according to claim 2, wherein the k transmitting antennas generate a combined near-field pattern

    $$\sum_{j=1}^{n} s_j \cdot exp\left[i2\pi\big(sin(\alpha_j \cdot x + f_j t)\big)\right]$$ where j denotes one of the n output signals, x represents the coordinate along the direction of the k transmitting antennas, $t$ is time, $\alpha_j$ is the angle of $j^{th}$ output signal with respect to the direction normal to the direction of the k transmitting antennas, $f_j$ is the optical frequency of the $j^{th}$ output signal and $s_j$ represents the amplitude of the $j^{th}$ output signal.

4. PIC according to claim 3, wherein n is equal to three, $\alpha_1 = -\alpha_3$, $\alpha_2 = 0$, $f_1 = f_2 - df$, $f_3 = f_2 + df$ and $s_1 = s_2 = s_3 = 1$.

5. PIC according to claim 4, wherein, for a transmitting antenna at position $x$, the field amplitude is $1 + 2 \cdot cos[2\pi(sin(\alpha_1 \cdot x - df \cdot t))]$ and the phase is $2\pi f_2 \cdot t$.

6. PIC according to claim 5, wherein a ramp function is used in the phase modulation.

**7.** PIC according to claim 1, wherein the transmitting array comprises k transmitting antennas ($120_1$, $120_2$, $120_3$) positioned in a two-dimensional array, k being a natural number greater than or equal to four.

**8.** PIC according to any one of the claims 2 to 7, wherein m is equal to n and the transmitting antennas are identical to the receiving antennas.

**9.** PIC according to any one of the claims 2 to 8, wherein the receiving antennas and the transmitting antennas are formed by one or more grating couplers.

**10.** PIC according to any one of the preceding claims, wherein m is equal to n and each receiving direction is the inverse of a corresponding output signal direction.

**11.** PIC according to any one of the preceding claims, wherein the photo-diodes are balanced photo-diodes.

**12.** PIC according to any one of the preceding claims, wherein the PIC further comprises input means to provide an external laser beam to the PIC.

**13.** PIC according to claim 12, wherein the input means is one of: a grating coupler and an edge coupler, such as a taper or an inverted taper.

**14.** A three-dimensional, 3D, laser Doppler vibrometer, LDV, comprising:

- a laser source to generate a laser beam;
- a photonic integrated circuit, PIC, according to any one of the preceding claims, the PIC being coupled to the laser source;
- an optical mirror system configured to focus the n output signals on the single target location and to focus the reflection signals from the single target location to the PIC; and
- a demodulator to determine the instantaneous velocity and direction of the single target location from the photo-current signals.

**Patentansprüche**

**1.** Eine photonische integrierte Schaltung, PIC, (100), konfiguriert für ein dreidimensionales, 3D, Laser-Doppler-Vibrometer, LDV, wobei die PIC Folgendes umfasst:

- einen Spalter (116), um eine Laserstrahl in ein Messsignal und ein Referenzsignal zu spalten;
- ein Phasen-Amplituden-Modulator-Array (140), gekoppelt an ein Sendearray (120), um, aus dem Messsignal, n Ausgabesignale (122) zu generieren, die an eine einzige Zielposition zu richten sind, und um die n Ausgabesignale aus im Wesentlichen einer einzigen Position auszugeben, wobei jedes Ausgabesignal eine andere Richtung und eine andere Trägerfrequenz hat, wobei n eine natürliche Zahl größer als oder gleich drei ist;
- ein Empfangsarray (142), welches m Empfangsantennen ($123_1$, $123_2$, $123_3$) umfasst, wobei jede Empfangsantenne konfiguriert ist, um ein Reflexionssignal aus einer anderen Empfangsrichtung zu empfangen, wobei jedes Reflexionssignal bezeichnend für eines oder mehrere der Ausgabesignale ist, welche an der einzigen Zielposition reflektiert wurden, wobei m eine natürliche Zahl größer als oder gleich drei ist;
- für jede Empfangsantenne, einen damit verbundenen Mischer (132), um das Referenzsignal mit dem empfangenen reflektierten Signal zu mischen; und
- für jeden Mischer zumindest eine damit verbundene Fotodiode (138), um ein Fotostromsignal aus dem gemischten Signal zu generieren.

**2.** PIC nach Anspruch 1, wobei das Sendearray k Sendeantennen ($123_1$, $123_2$, $123_3$) umfasst, positioniert nebeneinander entlang einer im Wesentlichen geraden Linie, wobei k eine natürliche Zahl größer als oder gleich drei ist.

**3.** PIC nach Anspruch 2, wobei die k Sendeantennen ein kombiniertes Nahfeldmuster $\sum_{j=1}^{n} s_j \cdot exp\left[i2\pi\left(sin(\alpha_j \cdot x + f_j t)\right)\right]$ generieren, wobei j eines der n Ausgabesignale bezeichnet, x für die Koordinate entlang der Richtung der k Sendeantennen steht, $t$ Zeit ist, $\alpha_j$ der Winkel von j. Ausgabesignal in Bezug auf die Richtung normal zur Richtung der k Sendeantennen ist, $f_j$ die optische Frequenz des j. Ausgabesignals ist und $s_j$ für die Amplitude des j. Ausgabesignals steht.

4. PIC nach Anspruch 3, wobei n gleich drei, $\alpha_1 = -\alpha_3$, $\alpha_2 = 0$, $f_1 = f_2 - df$, $f_3 = f_2 + df$ und $s_1 = s_2 = s_3 = 1$ ist.

5. PIC nach Anspruch 4, wobei, für eine Sendeantenne in Position $x$, die Feldamplitude $1 + 2 \cdot \cos[2\pi(\sin(\alpha_1 \cdot x - df \cdot t))]$ und die Phase $2\pi f_2 \cdot t$ ist.

6. PIC nach Anspruch 5, wobei eine Rampenfunktion in der Phasenmodulation verwendet wird.

7. PIC nach Anspruch 1, wobei das Sendearray k Sendeantennen ($123_1$, $123_2$, $123_3$) umfasst, positioniert in einem zweidimensionalen Array, wobei keine natürliche Zahl größer als oder gleich vier ist.

8. PIC nach irgendeinem der Ansprüche 2 bis 7, wobei m gleich n ist und die Sendeantennen identisch mit den Empfangsantennen sind.

9. PIC nach irgendeinem der Ansprüche 2 bis 8, wobei die Empfangsantennen und die Sendeantennen durch einen oder mehrere Gitterkoppler gebildet sind.

10. PIC nach irgendeinem der vorigen Ansprüche, wobei m gleich n ist und jede Empfangsrichtung das Umgekehrte einer entsprechenden Ausgabesignalrichtung ist.

11. PIC nach irgendeinem der vorigen Ansprüche, wobei die Fotodioden ausbalancierte Fotodioden sind.

12. PIC nach irgendeinem der vorigen Ansprüche, wobei die PIC ferner Eingabemittel umfasst, um einen externen Laserstrahl für die PIC bereitzustellen.

13. PIC nach Anspruch 12, wobei das Eingabemittel ein Element ist von: einem Gitterkoppler und einem Kantenkoppler, wie ein Taper oder ein umgekehrter Taper.

14. Ein dreidimensionales, 3D, Laser-Doppler-Vibrometer, LDV, welches Folgendes umfasst:

   - eine Laserquelle, um einen Laserstrahl zu erzeugen;
   - eine photonische integrierte Schaltung, PIC, nach irgendeinem der vorigen Ansprüche, wobei die PIC an die Laserquelle gekoppelt ist;
   - ein optisches Spiegelsystem, konfiguriert, um die n Ausgabesignale an die einzige Zielposition zu fokussieren und um die Reflexionssignale von der einzigen Zielposition zur PIC zu fokussieren; und
   - einen Demodulator, um die Momentangeschwindigkeit und Richtung der einzigen Zielposition aus den Fotostromsignalen zu bestimmen.

**Revendications**

1. Circuit intégré photonique, PIC, (100) configuré pour un vibromètre laser Doppler, LDV, tridimensionnel, 3D, le PIC comprenant :

   - un séparateur (116) pour diviser un faisceau laser en un signal de mesure et un signal de référence ;
   - un réseau de modulateurs phase-amplitude (140) couplé à un réseau de transmission (120) pour générer, à partir du signal de mesure, n signaux de sortie (122) à diriger vers un emplacement cible unique et pour émettre les n signaux de sortie à partir sensiblement d'un emplacement unique, chaque signal de sortie présentant une direction différente et une fréquence porteuse différente, n étant un nombre naturel supérieur ou égal à trois ;
   - un réseau de réception (142) comprenant m antennes de réception ($123_1$, $123_2$, $123_3$), chaque antenne de réception étant configurée pour recevoir un signal de réflexion à partir d'une direction de réception différente, chaque signal de réflexion indiquant qu'un ou plusieurs des signaux de sortie ont été réfléchis à l'emplacement cible unique, m étant un nombre naturel supérieur ou égal à trois ;
   - pour chaque antenne de réception, un mélangeur (132) connecté à celle-ci pour mélanger le signal de référence avec le signal réfléchi reçu ; et

- pour chaque mélangeur, au moins une photodiode (138) connectée à celui-ci pour générer un signal de photo-courant à partir du signal mélangé.

2. PIC selon la revendication 1, dans lequel le réseau de transmission comprend k antennes de transmission ($120_1$, $120_2$, $120_3$) positionnées adjacentes les unes aux autres le long d'une ligne sensiblement droite, k étant un nombre naturel supérieur ou égal à trois.

3. PIC selon la revendication 2, dans lequel les k antennes de transmission génèrent un motif de champ proche combiné $\Sigma_{j=1}^{n} s_j \bullet exp[i2\pi(sin(\alpha_j \bullet x + f_j t))]$ où j désigne l'un des n signaux de sortie, x représente la coordonnée le long de la direction des k antennes de transmission, $t$ est le temps, $\alpha_j$ est l'angle du $j^{ème}$ signal de sortie par rapport à la direction normale à la direction des k antennes de transmission, $f_j$ est la fréquence optique du $j^{ème}$ signal de sortie et $s_j$ représente l'amplitude du $j^{ème}$ signal de sortie.

4. PIC selon la revendication 3, dans lequel n est égal à trois, $\alpha_1 = -\alpha_3$, $\alpha_2 = 0$, $f_1 = f_2 - df$, $f_3 = h + df$ et $s_1 = s_2 = s_3 = 1$.

5. PIC selon la revendication 4, dans lequel, pour une antenne de transmission à la position x, l'amplitude du champ est $1 + 2 \bullet cos[2\pi(sin(\alpha_1 \bullet x - df \bullet t))]$ et la phase est $2\pi f_2 \bullet t$.

6. PIC selon la revendication 5, dans lequel une fonction de rampe est utilisée dans la modulation de phase.

7. PIC selon la revendication 1, dans lequel le réseau de transmission comprend k antennes de transmission ($120_1$, $120_2$, $120_3$) positionnées dans un réseau bidimensionnel, k étant un nombre naturel supérieur ou égal à quatre.

8. PIC selon l'une quelconque des revendications 2 à 7, dans lequel m est égal à n et les antennes de transmission sont identiques aux antennes de réception.

9. PIC selon l'une quelconque des revendications 2 à 8, dans lequel les antennes de réception et les antennes de transmission sont formées par un ou plusieurs coupleurs de réseau.

10. PIC selon l'une quelconque des revendications précédentes, dans lequel m est égal à n et chaque direction de réception est l'inverse d'une direction de signal de sortie correspondante.

11. PIC selon l'une quelconque des revendications précédentes, dans lequel les photodiodes sont des photodiodes équilibrées.

12. PIC selon l'une quelconque des revendications précédentes, dans lequel le PIC comprend en outre un moyen d'entrée pour fournir un faisceau laser externe au PIC.

13. PIC selon la revendication 12, dans lequel le moyen d'entrée est l'un parmi : un coupleur de réseau et un coupleur de bord, tel qu'un cône ou un cône inversé.

14. Vibromètre laser Doppler, LDV, tridimensionnel, 3D, comprenant :

- une source laser pour générer un faisceau laser ;
- un circuit intégré photonique, PIC, selon l'une quelconque des revendications précédentes, le PIC étant couplé à la source laser ;
- un système de miroir optique configuré pour focaliser les n signaux de sortie sur l'emplacement cible unique et pour focaliser les signaux de réflexion de l'emplacement cible unique vers le PIC ; et
- un démodulateur pour déterminer la vitesse instantanée et la direction de l'emplacement cible unique à partir des signaux de photo-courant.

$d_0$

$\Delta d(t)$

1

4

3

2

2

# F i g . 1
## (PRIOR ART)

42

38

36

32

34

30

12

14

16

18

20

28

22

26

24

10

# F i g . 2
## (PRIOR ART)

*Fig. 3*

**Fig. 4**

**Fig. 5**

EP 3 734 328 B1

*Fig. 6A*

*Fig. 6B*

*Fig. 6C*

*Fig. 6D*

*Fig. 6E*

*Fig. 6F*

116

116

116

116

116

116

EP 3 734 328 B1

*Fig. 7B*

*Fig. 7A*

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2013083389 A1

### Non-patent literature cited in the description

- Three-channel three-dimensional self-mixing thin-slice solid-state laser-Doppler measurements. **TAKAYUKI OHTOMO et al.** APPLIED OPTICS. Optical Society of America, 20 January 2009, vol. 48

- Two-channel self-mixing laser Doppler measurement with carrier-frequency-division multiplexing. **KENJU OTSUKA et al.** APPLIED OPTICS. Optical Society of America, 20 March 2005, vol. 44
- Analysis of a Multibeam Optical Beamforming Network Based on Blass Matrix Architecture. **CHRISTOS TSOKOS et al.** Journal of Lightwave Technology. IEEE, 15 August 2018, vol. 36